# EUROPEAN PATENT SPECIFICATION

(11) **EP 0 571 388 B1**
(45) Date of publication and mention of the grant of the patent: **05.07.1995**
(21) Application number: 91920720.9
(22) Date of filing: 17.10.1991
(51) Int. Cl.: B60K 15/035

(54) **DEVICE FOR BALANCING SUBATMOSPHERIC PRESSURE IN CONTAINERS FOR LIQUID**
UNTERDRUCKAUSGLEICHSVORRICHTUNG IN FLÜSSIGKEITSBEHÄLTERN
DISPOSITIF PERMETTANT D'EQUILIBRER LA PRESSION NEGATIVE DANS DES CONTENEURS REMPLIS DE LIQUIDE

(30) Priority: 14.02.1991 SE 9100450
(43) Date of publication of application: 01.12.1993
(73) Proprietor: AB VOLVO, 405 08 Göteborg (SE)
(72) Inventor: HARDE, Bo, S-417 17 Göteborg (SE)
(74) Representative: Hellbom, Lars Olof
(86) International application number: SE9100700
(87) International publication number: WO9214626

(56) References cited:
- EP-A- 0 311 286

## Description

The present invention relates to a device for equalizing subatmospheric pressure in a container with a fluid medium, comprising an electromagnetic venting valve disposed between the interior of the container and an outlet from the container, and a control circuit connected for controlling the valve with a pressure sensor arranged to sense the subatmospheric pressure in the container and provide a signal to the control circuit, and to open the venting valve at a certain pre-determined subatmospheric pressure.

Pressure monitoring systems with venting valves of this type are used in a wide range of applications. In order for these systems to work, they must be constantly connected to operating voltage. These systems are thus not suitable for use in monitoring subatmospheric pressure in fuel tanks in vehicles where the current must be broken when the vehicle is not in operation.

The present invention is directed to the development of a system for pressure monitoring, in particularly monitoring of subatmospheric pressue for use in particular, but not exclusively, for monitoring and compensating subatmospheric pressure in fuel tanks for motor vehicles to prevent deformation caused by partial vacuum in the tank.

In modern automobiles, for the purpose of saving weight, more and more use has been made of fuel tanks in non-metallic materials, e.g. plastics, with relatively thin walls. Even at a relative slight partial vacuum, e.g. on the order of magnitude of 3 kPa, a relatively heavy deformation of the tank can occur due to the thinness of the walls, and this can lead to damage to sensitive components mounted in the tank, e.g. the fuel pump, the level sensor, etc.

Most modern engines with direct injection are fed from the tank with excess fuel, the excess being returned to the tank.

This results in raised temperatures in the fuel in the tank, so that the temperature, when the engine is shut off, can be as much as 70°C. The tank must therefore be dimensioned in its material and wall thickness to be able to resist the partial vacuum which can arise in the tank when the fuel cools off.

The purpose of the present invention is in general to provide a device of the type described by way of introduction, which can be used in containers in which the partial vacuum arising in the fluid medium due to the dropping temperature can be equalized even if a switch for the control circuit governing the venting valve has been switched off.

This is achieved according to the invention in a device of the type described by way of introduction by virtue of the fact that the control circuit is connected to a current source via a manually operated switch, and in that a separate circuit with a temperature controlled switch is coupled in parallel to the manual switch.

Such a device applied to an automobile with a low pressure sensor makes it possible for the control circuit, even though the automobile is parked and the ignition is turned off, to open the venting valve and equalize the partial vacuum in the tank when the fuel cools in the parked car.

The invention will be described in more detail with reference to an example shown in the accompanying drawing, where
Figure 1 shows a circuit diagram of a device according to the invention,
Figure 2 shows a cross-section through a pressure sensor, particularly designed to be used in a device according to the invention, and
Figure 3 is a partially cut-away plan view of the pressure sensor of Figure 2.

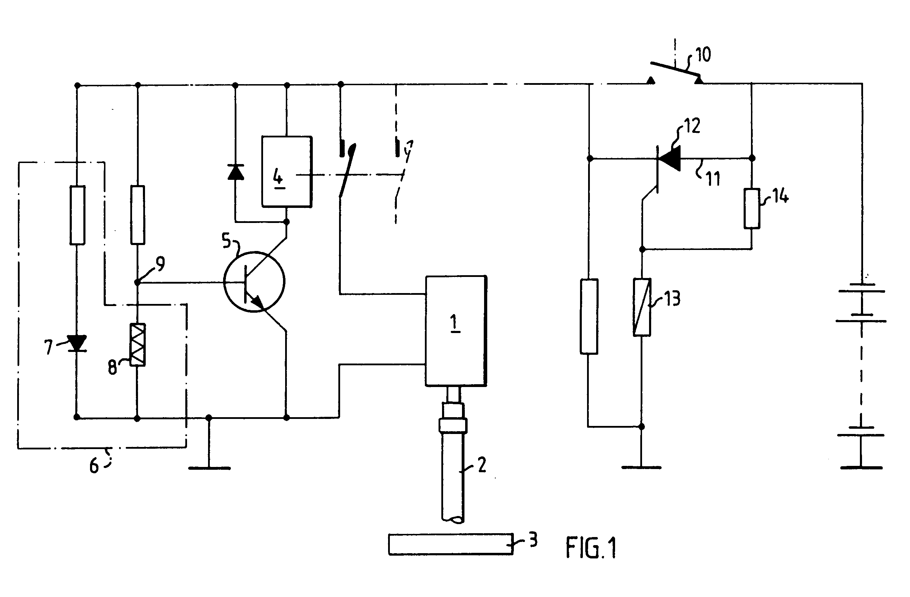

In the circuit diagram in Figure 1, 1 designates an electro-magnetically controlled valve, and 2 designates a venting hose to a tank 3, e.g. a fuel tank in a car. The valve 1 is opened and closed by a relay 4, which is controlled by a control circuit containing a transistor 5 and the pressure sensor 6 including an LED 7 and an LDR resistor 8. When the valve 1 is open, the tank is connected via the hose 2 to the atmosphere or to a container under atmospheric pressure, e.g. a filter with activated charcoal.

At atmospheric pressure or over pressure, the pressure sensor 6 provides a low voltage at the point 9 by virtue of the fact that the resistance of the LDR resistor is low, e.g. about 600Ω. The relay 4 is open and the valve 1 is closed. As the pressure drops to subatmospheric pressure, e.g. 0.5 kPa, the resistance in the resistor 8 rises to about 0.5MΩ, thereby increasing the voltage at the point 9 so that as the switch 10, which can be an ignition lock, is turned on, current will be conducted through the relay 4 and the collector emitter path of the transistor, thus activating the relay and opening the valve 1. As soon as pressure equalization has been completed, the valve 1 will return to its closed position, and this takes place when the voltage at the transistor base drops as the resistance in the LDR resistor drops.

When the current is broken by the switch 10 (the ignition lock), the valve 1 is normally closed. If the temperature of the fuel is high and the surrounding air temperature is low, the pressure sensor 6 will be activated, when the temperature drops, to open the venting valve, since the fuel, as it cools off, creates a partial vacuum in the tank. Under these circumstances, to create an automatic venting of the tank, an extra switch circuit 11 is arranged in parallel to the switch 10, according to the invention. This circuit contains, inter alia, a tyristor 12, an NTC resistor 13, and a resistor 14 serving as a voltage divider. At low temperature, the resistance in the resistor 13 is high, and when the voltage has reached a certain level (0.8 volts), due to the resistance increase caused by the low temperature, the tyristor 12 will start to conduct and the relay circuit will conduct current. If the pressure sensor 6 in these circumstances indicates a partial vacuum, the valve 1 will open and vent the tank. As soon as the switch 10 is closed, the tyristor 12 will return to its rest position, and only be activated again at low temperature.

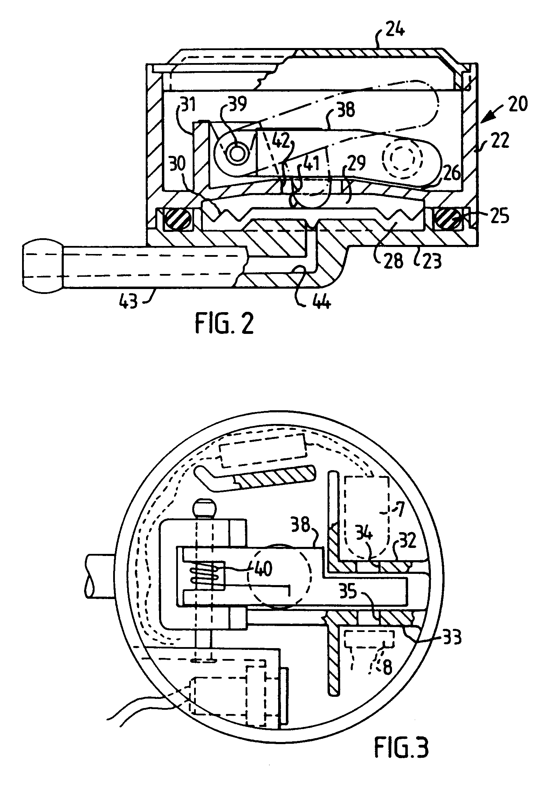

The control circuit described is particularly suited for use in combination with a pressure sensor of the type shown in Figures 2 and 3. It shows a housing 20 of plastic, for example, comprising a cylindrical wall portion 22, a circular bottom portion 23 and a circular cover 24, which are fixed to the cylinder 22. The bottom portion 3 is fixed to the cylinder 22 with an intermediate O-ring 25, and it defines together with a bottom plate 26 made in one piece with the cylinder, a space which is divided into lower and upper chambers 28 and 29, respectively, by a thin membrane 30 stretched between the lower edge of the cylinder 22 and the bottom portion 23.

The bottom plate 26 is provided with a bracket 31 and a pair of protecting walls 32, 33 with circular holes 34, 35. The LED 7 is fixed to the bottom plate 26 in front of the opening 34, and the LDR resistor 8 is fixed to the bottom plate in front of the opening 35. A semaphore-like arm 38 is pivotally mounted in a shaft 39 carried by the bracket 31 and is biased by a spring 40 towards the plate 26. The arm 38 has an outer screening portion 41 lying between the screen walls 32, 33, and which, in its position shown in Figure 2 with solid lines, covers the openings 34, 35. Furthermore, the arm 38 has approximately in its middle a heel 41 which extends through an opening 42 in the plate 26 and is held in contact with the membrane 30 by the spring 40. A tube 43 with a channel 44 leading into the lower chamber 28 is intended to be connected to the container where the pressure is to be monitored, e.g. the expansion space in a fuel tank for a motor vehicle.

The LDR resistor 8 can be a resistor, in which the resistance can be changed from about 0.5MΩ in the dark to about 600Ω at full illumination. The space above the bottom plate 26 is ventilated to the surroundings, so that the atmospheric pressure prevails in this space. As the pressure in the lower chamber varies, the membrane 40 will bulge upwards or downwards depending on whether there is overpressure or subatmospheric pressure, and the arm 38 can swing between the position shown with solid lines to the position shown with dash-dot lines. The cooperating components, i.e. the membrane 30, the arm 38 and the spring 40, can be adapted to each other so that the arm 38 assumes the position shown with solid lines when there is a subatmospheric pressure of about 0.5 kPa, whereupon the LDR resistor is kept in the dark. When there is pressure compensation between the lower chamber 28 and the chamber above the bottom plate, the central portion of the membrane is moved upwards, thus swinging the arm 18 up. When the screening portion 41 of the arm has been moved away so that the LDR resistor is once again fully illuminated, the resistance in the resistor 8 will drop and the control circuit will brake the current to the relay 4, where-upon the venting valve 1 is closed.

The device described contains simple and inexpensive components requiring very little space. Due to its very small space requirements, it can be integrated with other components, e.g. a level sensor for the fuel tank. The pressure sensor with the electronic control circuit and the venting valve can be manufactured at very low cost.

## Claims

1. Device for equalizing subatmospheric pressure in a container (3) with a fluid medium, comprising an electromagnetic venting valve (1) disposed between the interior of the container (3) and an outlet from the container (3), and a control circuit connected for controlling the valve (1) with a pressure sensor (6) arranged to sense the subatmospheric pressure in the container (3) and provide a signal to the control circuit, and to open the venting valve (1) at a certain pre-determined subatmospheric pressure, **characterized** in that the control circuit is connected to a current source via a manually operated switch (10), and that a circuit (11) with a temperature controlled switch (12) is coupled in parallel to the manual switch.

2. Device according to Claim 1, **characterized** in that said separate circuit (11) contains a thyristor (12) and an NTC resistor (13).

3. Device according to Claim 1 or 2, **characterized** in that the container (3) is a fuel tank in a motor vehicle, that the magnetic valve (1) is arranged in a venting conduit (2) to an expansion space in the tank, and that the manual switch (10) is included in the ignition lock of the vehicle.

4. Device according to one of Claims 1-3, **characterized** in that said separate ciruit (11) and said temperature controlled switch (12) are coupled into a control circuit with a pressure sensor (20), comprising a pressure actuated element (38) with a light screening portion disposed between a light source (17) and a light sensitive signal emitter (8) illuminated by said light source (17).

## Patentansprüche

1. Vorrichtung zum Ausgleich von subatmosphärischem Druck in einem Behälter (3) mit einem fluiden Medium, umfassend ein elektromagnetisches Entlüftungsventil (1), das zwischen dem Inneren des Behälters (3) und einem Auslaß des Behälters (3) angeordnet ist, und ein Regelkreis, der zum Regeln des Ventils (1) mit einem Drucksensor (6) verbunden ist, der angeordnet ist, um den subatmosphärischen Druck im Behälter (3) aufzunehmen und ein Signal zum Regekreis vorzusehen, und das Entlüftungsventil (1) bei einem gewissen, vorbestimmten subatmosphärischen Druck zu öffnen,
dadurch **gekennzeichnet**, daß
der Regelkreis mit einer Spannungsquelle über einen manuell bedienten Schalter (10) verbunden ist, und daß ein Schaltkreis (11) mit einem temperaturgeregelten Schalter (12) parallel zum manuellen Schalter gekoppelt ist.

2. Vorrichtung nach Anspruch 1,
dadurch **gekennzeichnet**, daß
der getrennte Schaltkreis (11) einen Thyristor (12) und einen NTC-Widerstand (13) enthält.

3. Vorrichtung nach Anspruch 1 oder 2,
dadurch **gekennzeichnet,** daß
der Behälter (3) ein Kraftstofftank in einem Motorfahrzeug ist, daß das Magnetventil (1) in einer Entlüftungsleitung (2) zu einem Expansionsraum im Tank angeordnet ist, und daß der manuelle Schalter (10) im Zündschloß des Fahrzeugs beinhaltet ist.

4. Vorrichtung nach einem der Ansprüche 1 bis 3,
dadurch **gekennzeichnet**, daß
der getrennte Schaltkreis (11) und der temperaturgeregelte Schalter (12) in einem Regelkreis mit einem Drucksensor (20) gekoppelt sind, der ein Druckaufnahmeelement (38) mit einem lichtabschirmenden Anteil umfaßt, der zwischen einer Lichtquelle (17) und einem lichtempfindlichen Signalgeber (8) angeordnet ist, der von der Lichtquelle (17) bestrahlt wird.

## Revendications

1. Dispositif destiné à équilibrer une pression négative dans un récipient (3) contenant un milieu fluide, comprenant une vanne de purge électromagnétique (1) placée entre l'intérieur du récipient (3) et un orifice de sortie du récipient (3), et un circuit de commande relié de manière à commander la vanne (1) à l'aide d'un capteur de pression (6) disposé de manière à détecter la pression négative du récipient (3) et à fournir un signal au circuit de commande, ainsi qu'à ouvrir la vanne de purge (1) à une certaine valeur de pression négative prédéterminée, caractérisé en ce que le circuit de commande est relié à une source de courant grâce à un commutateur (10) à commande manuelle, et en ce qu'un circuit (11) possédant un commutateur (12) à commande thermique est couplé en parallèle au commutateur manuel.

2. Dispositif selon la revendication 1, caractérisé en ce que le circuit (11) séparé comporte un thyristor (12) et une résistance NTC (13).

3. Dispositif selon la revendication 1 ou 2, caractérisé en ce que le récipient (3) est un réservoir de comburant d'un moteur de véhicule automobile, en ce que la vanne magnétique (1) est disposée dans un conduit (2) de purge menant à un espace d'expansion du réservoir, et en ce que le commutateur (10) manuel fait partie du système de verrouillage de l'allumage du véhicule.

4. Dispositif selon l'une quelconque des revendications 1 à 3, caractérisé en ce que le circuit (11) séparé et le commutateur (12) à commande thermique sont reliés à un circuit de commande possédant un capteur de pression (20), comprenant un élément (38) actionné par pression muni d'une partie filtrant la lumière disposé entre une source lumineuse (17) et un émetteur (8) de signaux sensible à la lumière et éclairé par une source (17) de lumière.
